# EUROPEAN PATENT SPECIFICATION

(11) **EP 3 088 731 B1**
(45) Date of publication and mention of the grant of the patent: **06.11.2019**
(21) Application number: 15165843.2
(22) Date of filing: 30.04.2015
(51) Int. Cl.: F03D 1/00

(54) **TRANSPORT SYSTEM FOR TRANSPORTATION OF A GENERATOR OF A WIND TURBINE AND METHOD FOR TRANSPORTATION OF THE GENERATOR**
TRANSPORTSYSTEM ZUM TRANSPORTIEREN EINES GENERATORS EINER WINDTURBINE UND VERFAHREN ZUM TRANSPORTIEREN DES GENERATORS
SYSTÈME DE TRANSPORT POUR LE TRANSPORT D'UN GÉNÉRATEUR D'UNE ÉOLIENNE ET PROCÉDÉ POUR LE TRANSPORT DU GÉNÉRATEUR

(43) Date of publication of application: 02.11.2016
(73) Proprietor: Siemens Gamesa Renewable Energy A/S, 7330 Brande (DK)
(72) Inventor: Poulsen, Henning, 6900 Skjern (DK)
(74) Representative: Aspacher, Karl-Georg

(56) References cited:
- EP-A1- 1 336 755
- WO-A1-2004/041589
- DE-A1-102012 002 755
- FR-A1- 3 006 958
- JP-A- 2002 059 776

## Description

### BACKGROUND OF THE INVENTION

### 1. FIELD OF THE INVENTION

The present invention refers to a transport system for transportation of a generator of a wind turbine and a method for transportation of the generator.

### 2. DESCRIPTION OF THE RELATED ART

A wind turbine comprises a generator for transferring kinetic energy of the wind into electricity. The generator which is driven by wind turbine blades is located in a nacelle of the wind turbine. The nacelle is mounted on a top of a tower of the wind turbine. An example of a method of transportation for a nacelle is described in EP 1 336 755 A1.

For wind turbines, large generators are used. It is difficult to transport such large generators, especially large direct drive generators, on a road.

For the transportation of the generator of the wind turbine on a road, a transport system with at least two transport wheel units is used. Between the transport wheel units a transport frame is arranged for carrying the generator during the transportation.

The generator is fixed to the transport frame with the aid of lashing chains. These lashing chains may cause damage of the surface of the generators. In addition, such a transport system is not flexible enough in view of possible driving obstacles like hills or curves.

### SUMMARY OF THE INVENTION

It is an objective of the invention to provide an easy solution for transporting of heavy generators of a wind turbine without lashing chains.

This objective is achieved by the invention specified in the claims.

Concerning the invention, a transport system for transportation of a generator of a wind turbine is provided. The transport system comprises at least one first transport wheel unit, at least one second transport wheel unit and at least one main transport frame element for carrying the generator during the transportation of the generator. The main transport frame element is arranged between the first transport wheel unit and the second transport wheel unit. The main transport frame element is connected to at least one tower clamp-set for a transportation of a tower segment of a tower of the wind turbine. The tower clamp-set is installed on top of at least one of the transport wheel units. The tower clamp-set is designed such that the tower segment can be lifted off a ground during the transportation of the tower segment.

In addition to the transport system, a method for transportation of a generator of a wind turbine by using the transport system is provided with following steps: a) attaching the generator to the main transport frame element, b) fixing of the generator to the main transport frame element and c) transporting the transport frame with the generator. Especially, a direct drive generator of a wind turbine is used as a generator. The direct drive generator can be transported with the aid of the transport system.

The main transport frame element is a carrier frame in which the generator can be arranged. The main transport frame element is connected to both transport wheel units. For instance, the transport wheel units are multi wheel trailers.

Preferably, the tower clamp-set is installed on the respective top of both wheel units. Each of the transport wheel units comprise at least one lifting means for the lifting of the tower segment during its transportation. These lifting means are components of the clamp-set. The transport frame is fixed to both transport wheel units. This is carried out with the aid of beams with which the transport frame is located between the transport wheel units.

With this solution it is not necessary to use a specific transport system for generators of a wind turbine. A transport system for other components of a wind turbine, namely for tower segments of the tower of wind turbine is used. Core of this transport system is the clamp-set with which the lifting off the ground of the transported component during its transportation is possible.

More preferably, the tower clamp-set is a standard tower clamp-set. The standard tower clamp-set is not adapted to specific components of the wind turbine. It is used for the transportation of different components of the wind turbine.

In a preferred embodiment, the main transport frame element comprises a bottom transport frame element for supporting the generator. The bottom transport frame element is a component of the complete transport frame.

It is advantageous to fasten the generator during the transportation of the generator. This can be realized by suitable fastening components. Therefore, in a preferred embodiment, the generator can be fixed to the bottom transport frame with the aid at least one fixing element which is selected from the group consisting of bolts and twist locks. Alternative fixing elements are possible, too.

Preferably, the main transport frame element comprises at least one removable top transport frame element for stabilizing the main transport frame element. The top transport frame element is a component of the complete transport frame, too. The top transport frame element comprises at least one beam and/or at least one compression bar. The use of the top transport element is advantageous due to the heavy load which is connected to a generator. Moreover, due to the possibility of removing this top transport frame element, the generator can easily be arranged at the bottom frame transport element. In addition, the generator which is located on the bottom transport frame element is easily accessible.

The top transport frame element comprises proper components. In a preferred embodiment, the top transport frame element comprises at least one component which is selected from the group consisting of beam and compression bar. In order to reduce the total weight of the transports system, the number of these components is limited. For instance, just two beams are used. With the aid of the compression bars it is possible to fix the generator at the bottom transport frame element with the aid of pressure. The generator is pressed against the bottom transport frame. This can support the above mentioned fixing elements.

In order to enhance the reliability and security of the transport system it is meaningful to strengthen the top transport frame element. Therefore, in a preferred embodiment, the removable top transport frame element comprises at least one stiffening element for stiffening the top transport frame element.

For further enhancing the reliability and security of the transport system, the main transport frame element comprises at least one end transport frame element for enhancing a fixation of the generator to the main transport frame element. The end transport frame is an additional component of the complete transport frame. Thereby, the end transport frame can be solidly fixed at the main transport frame element. Preferably, the end transport frame element is detachably (removable) connected to the main transport frame element. This enhances a flexibility of the transport system: Different generators can be transported.

With the aid of the end transport frame the generator can be fixed during the transportation of the generator. It is decisive that it is not possible for the generator to move during the transportation. This is reached with the aid of the end frame.

Preferably, the transport system can be attached to a truck. The truck is a standard truck. The wheel units (trailers) can be removable attached to the truck.

With the invention following specific advantages are achieved:
- With the transport system a secure transportation of heavy generators, especially direct drive generators is possible.
- Lashing chains which could violate or destroy a surface of the generator are not necessary.
- The use of standard clamp-sets for the transportation of wind power elements is possible. No specific adaption of the transport system for a heavy generator of a wind turbine is necessary.
- The transport system is flexible: Different generators with different sizes and different weight can be transported.
- The base of the transport system is a linked trailer system. This has the advantage that curves or hilltops of a road can easily be past.

### BRIEF DESCRIPTION OF THE DRAWINGS

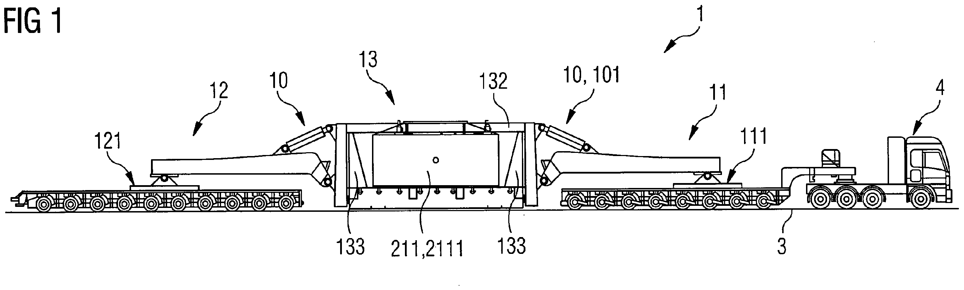

Figure 1 shows a transport system in a side-view.

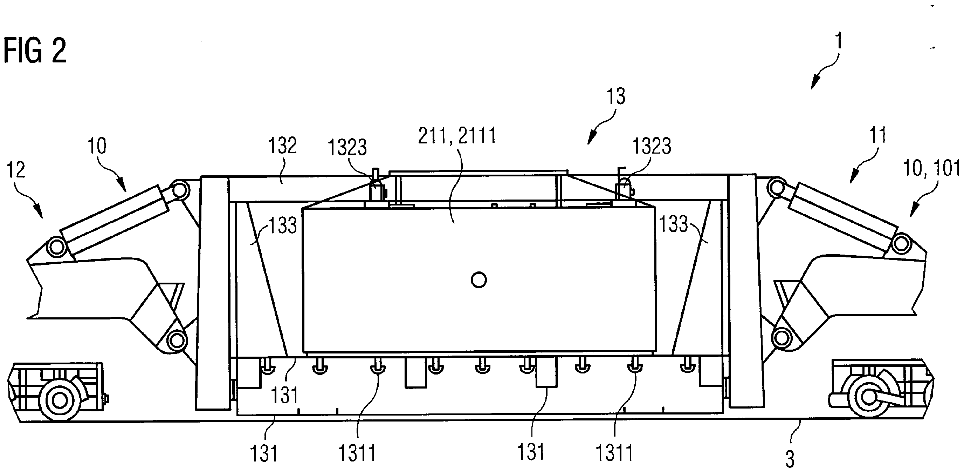

Figure 2 shows a section of figure 1.
Figure 3 shows a section of a transport system with the generator in a top view.

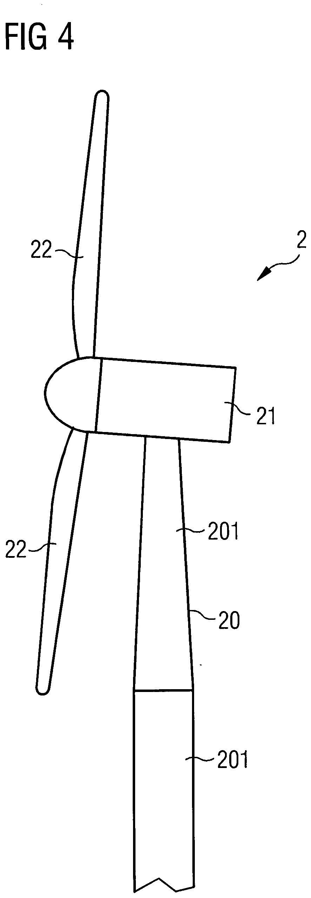

Figure 4 shows a wind turbine.

Base is a transport system 1 for transporting a generator 201 of a wind turbine 2. 10. The transport system can be attached to a truck 4. The truck is a standard truck.

The transport system 1 comprises a first transport wheel unit 11, a second transport wheel unit 12 and a main transport frame element 13 for carrying the generator 201 during a transportation of the generator 201. The main transport frame element 13 is a main carrier transport frame element in which the generator 201 of the wind turbine 2 can be arranged for its transportation. The transport wheel units 11 and 12 are multi wheel units.

The main transport frame element 13 is arranged between the first transport wheel unit 11 and the second transport wheel unit 12. The main transport frame element 13 is connected to a tower clamp set 10 for a transportation of a tower segment 211 of a tower 20 of the wind turbine 2. The clamp-set 10 is a standard tower clamp-set 101.

The standard clamp-set 101 is installed on top 111 of the transport wheel unit 11 and on top 121 of the transport wheel unit 12. The standard clamp-set 101 is designed such that the tower segment 211 can be lifted off a ground 3 during the transportation of the tower segment 211.

The main transport frame element 13 comprises a bottom transport frame element 131 for supporting the generator 211. The bottom transport frame element 131 is a bottom carrier transport frame element. During the transportation, the generator 211 is fixed to the bottom transport frame 131 with the aid of a number of fixing element 1311. The fixing elements 1311 are bolts and/or twist locks.

The main transport frame element 13 comprises at least one detachable (removable) top transport frame element 132 for stabilizing the main transport frame element 13. The detachable top transport frame element 132 is a detachable top carrier frame element which is detachably connected to the main transport frame element 13. It comprises beams 1322 and compression bars 1323 with which the generator is pressed towards the bottom transport frame element 131. By this, the generator is fixed at least during the transportation of the generator.

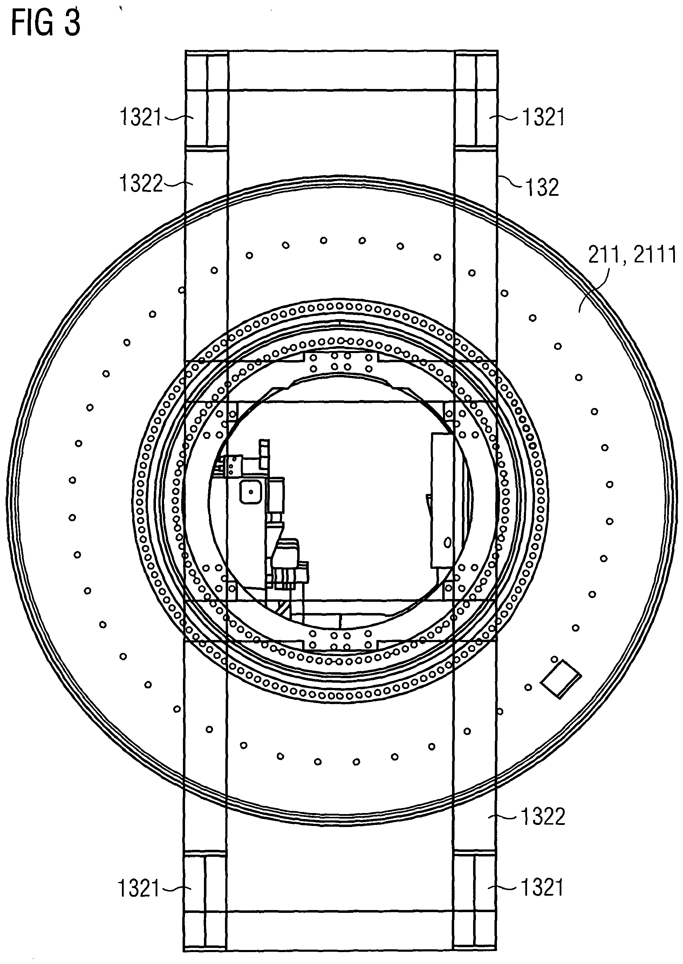

Additionally, the removable top transport frame element 132 comprises at least one stiffening element 1321 for stiffening the top transport frame element 132. Figure 3 shows four stiffening elements 1321 for stiffening the beams 1322 of the top transport frame element 132. The stiffening elements 1331 are located at the ends of the transport frame element 132.

Moreover, the main transport frame element 13 comprises two end transport frame elements 133 for enhancing a fixation of the generator 211 to the main transport frame element 13. These end transport frame element 133 are detachably connected to the main transport frame element 13. Alternatively, theses end transport frame elements are fastened to the main transport frame element 13.

By using the described transport system 1 a transportation of a generator 211 of a wind turbine 2 with following steps is carried out: a) Attaching the generator 211 to the main transport frame element 13, b) fixing of the generator 211 to the main transport frame element 13 and c) transporting the transport frame 13 with the generator 211. Thereby, a direct drive generator 2111 of a wind turbine 2 is transported. With the aid of the transport system, the generator is transported to a site where a wind turbine is installed or to a harbor or to a railway station for further transportation of the generator 211.

## Claims

1. Transport system (1) for transportation of a generator (211) of a wind turbine (2), the transport system (1) comprising:
- at least one first transport wheel unit (11);
- at least one second transport wheel unit (12); and
- at least one main transport frame element (13) for carrying the generator (211) during the transportation of the generator (211);
wherein
- the main transport frame element (13) is arranged between the first transport wheel unit (11) and the second transport wheel unit (12);
- the main transport frame element (13) is connected to two tower clamp-sets (10) for a transportation of a tower segment (211) of a tower (20) of the wind turbine (2);
- the tower clamp-sets (10) are respectively installed on top (111, 121) of the first and second transport wheel units (11, 12) ;
- the tower clamp-sets (10) are designed such that the tower segment (211) can be lifted off a ground (3) during the transportation of the tower segment (211).

2. Transport system according to claim 1, wherein any of the tower clamp-set (10) is a standard tower clamp-set (101).

3. Transport system according to claim 1 or 2, wherein the main transport frame element (13) comprises a bottom transport frame element (131) for supporting the generator (211) .

4. Transport system according to claims 3, wherein the generator (211) can be fixed to the bottom transport frame (131) with the aid at least one fixing element (1311) which is selected from the group consisting of bolts and twist locks.

5. Transport system according to one of the claims 1 to 4, wherein the main transport frame element (13) comprises at least one removable top transport frame element (132) for stabilizing the main transport frame element (13).

6. Transport system according to claim 5, wherein the top transport frame element (132) comprises at least one component which is selected from the group consisting of beam (1322) and compression bar (1323).

7. Transport system according to claim 5 or 6, wherein the removable top transport frame element (132) comprises at least one stiffening element (1321) for stiffening the top transport frame element (132).

8. Transport system according to one of the claims 1 to 7, wherein the main transport frame element (13) comprises at least one end transport frame element (133) for enhancing a fixation of the generator (211) to the main transport frame element (13).

9. Transport system according to claim 8, wherein the end transport frame element (133) is detachably connected to the main transport frame element (13).

10. Transport system according to one of the claims 1 to 9 which can be attached to a truck (4).

11. Method for transportation of a generator (211) of a wind turbine (2) by using the transport system (1) according to one of the claims 1 to 10, with the steps:
a) Attaching the generator (211) to the main transport frame element (13);
b) Fixing of the generator (211) to the main transport frame element (13); and
c) Transporting the transport frame (13) with the generator (211) .

12. Method according to claim 11, wherein a direct drive generator (2111) of a wind turbine (2) is used as the generator (2).

## Patentansprüche

1. Transportsystem (1) zum Transportieren eines Generators (211) einer Windturbine (2), wobei das Transportsystem (1) umfasst:
- mindestens eine erste Transportradeinheit (11);
- mindestens eine zweite Transportradeinheit (12); und
- mindestens ein Haupt-Transportrahmenelement (13), um den Generator (211) beim Transportieren des Generators (211) zu tragen; wobei
- das Haupt-Transportrahmenelement (13) zwischen der ersten Transportradeinheit (11) und der zweiten Transportradeinheit (12) angeordnet ist;
- das Haupt-Transportrahmenelement (13) mit zwei Turmspannsätzen (10) zum Transportieren eines Turmsegments (211) eines Turms (20) der Windturbine (2) verbunden ist;
- die Turmklammersätze (10) jeweils oben (111, 121) an der ersten und zweiten Transportradeinheit (11, 12) montiert sind;
- die Turmklammersätze (10) so konstruiert sind, dass das Turmsegment (211) beim Transportieren des Turmsegments (211) vom Boden (3) abgehoben werden kann.

2. Transportsystem nach Anspruch 1, wobei jeder der Turmklammersätze (10) ein standardmäßiger Turmklammersatz (101) ist.

3. Transportsystem nach Anspruch 1 oder 2, wobei das Haupt-Transportrahmenelement (13) ein unteres Transportrahmenelement (131) zum Unterstützen des Generators (211) umfasst.

4. Transportsystem nach Anspruch 3, wobei der Generator (211) mit Hilfe von mindestens einem Befestigungselement (1311), das aus der Gruppe bestehend aus Bolzen und Drehverriegelungen ausgewählt wird, am unteren Transportrahmen (131) befestigt werden kann.

5. Transportsystem nach einem der Ansprüche l bis 4, wobei das Haupt-Transportrahmenelement (13) mindestens ein abnehmbares oberes Transportrahmenelement (132) zum Stabilisieren des Haupt-Transportrahmenelements (13) umfasst.

6. Transportsystem nach Anspruch 5, wobei das obere Transportrahmenelement (132) mindestens eine Komponente umfasst, die aus der Gruppe bestehend aus Träger (1322) und Druckstange (1323) ausgewählt wird.

7. Transportsystem nach einem der Ansprüche 5 oder 6, wobei das abnehmbare obere Transportrahmenelement (132) mindestens ein Versteifungselement (1321) zum Versteifen des oberen Transportrahmenelements (132) umfasst.

8. Transportsystem nach einem der Ansprüche l bis 7, wobei das Haupt-Transportrahmenelement (13) mindestens ein End-Transportrahmenelement (133) umfasst, um die Fixierung des Generators (211) am Haupt-Transportrahmenelement (13) zu verstärken.

9. Transportsystem nach Anspruch 8, wobei das End-Transportrahmenelement (133) lösbar mit dem Haupt-Transportrahmenelement (13) verbunden ist.

10. Transportsystem nach einem der Ansprüche 1 bis 9, das an einem Lastkraftwagen (4) angebracht werden kann.

11. Verfahren zum Transportieren eines Generators (211) einer Windturbine (2) unter Verwendung des Transportsystems (1) nach einem der Ansprüche 1 bis 10, mit den Schritten:
a) Anbringen des Generators (211) am Haupt-Transportrahmenelement (13);
b) Fixieren des Generators (211) am Haupt-Transportrahmenelement (13); und
c) Transportieren des Transportrahmens (13) mit dem Generator (211) .

12. Verfahren nach Anspruch 11, wobei ein Direktantrieb-Generator (2111) einer Windturbine (2) als Generator (2) benutzt wird.

## Revendications

1. Système de transport (1) pour le transport d'un générateur (211) d'une éolienne (2), le système de transport (1) comprenant :
- au moins une première unité de roue de transport (11) ;
- au moins une seconde unité de roue de transport (12) ; et
- au moins un élément principal de châssis de transport (13) ; pour transporter le générateur (211) durant le transport du générateur (211) ;
dans lequel
- l'élément principal de châssis de transport (13) est agencé entre la première unité de roue de transport (11) et la seconde unité de roue de transport (12) ;
- l'élément principal de châssis de transport (13) est connecté à deux éléments de serrage de tour (10) pour le transport d'un segment (211) d'une tour (20) de l'éolienne (2) ;
- les éléments de serrage de tour (10) sont installés respectivement sur le dessus (111, 121) des première et deuxième unités de roue de transport (11, 12) ;
- les éléments de serrage de tour (10) sont conçus de sorte que le segment de tour (211) peut être levé du sol (3) durant le transport du segment de la tour (211).

2. Système de transport selon la revendication 1 dans lequel l'un des éléments de serrage (10) est un élément de serrage standard de tour (101).

3. Système de transport selon la revendication 1 ou 2 dans lequel l'élément principal de châssis de transport (13) comprend un élément de châssis de transport inférieur (131) pour supporter le générateur (211).

4. Système de transport selon la revendication 3 dans lequel le générateur (211) peut être fixé au châssis de transport inférieur (131) à l'aide d'au moins un élément de fixation (1311) qui est sélectionné depuis un groupe consistant en des boulons et des verrous tournants.

5. Système de transport selon l'une quelconque des revendications 1 à 4 dans lequel l'élément principal de châssis de transport (13) comprend au moins un châssis de transport supérieur amovible (132) pour stabiliser l'élément principal de châssis de transport (13).

6. Système de transport selon la revendication 5 dans lequel le châssis de transport supérieur (132) comprend au moins un composant qui est sélectionné depuis un groupe consistant en des poutres (1322) et des barres de compression (1323).

7. Système de transport selon la revendication 5 ou 6 dans lequel le châssis de transport supérieur amovible (132) comprend au moins un élément de raidissage (1321) afin de raidir le châssis de transport supérieur (132).

8. Système de transport selon l'une quelconque des revendications 1 à 7 dans lequel l'élément principal de châssis de transport (13) comprend au moins un élément de châssis de transport d'extrémité (133) afin d'améliorer une fixation du générateur (211) sur l'élément principal de châssis de transport (13).

9. Système de transport selon la revendication 8 dans lequel l'élément de châssis de transport d'extrémité (133) est connecté de manière détachable à l'élément principal de châssis de transport (13).

10. Système de transport selon l'une quelconque des revendications 1 à 9 qui peut être fixé à un camion (4).

11. Méthode de transport d'un générateur (211) d'une éolienne (2) par l'utilisation du système de transport (1) selon l'une quelconque des revendications 1 à 10, avec les étapes de :
a) Attache du générateur (211) à l'élément principal de châssis de transport (13) ;
b) Fixation du générateur (211) à l'élément principal de châssis de transport (13) ; et
c) Transport du châssis de transport (13) avec le générateur (211) .

12. Méthode selon la revendication 11 dans laquelle un générateur à entraînement direct (2111) d'une éolienne est utilisé comme générateur (2).
